# EUROPÄISCHE PATENTSCHRIFT

(11) **EP 2 493 708 B1**
(45) Veröffentlichungstag und Bekanntmachung des Hinweises auf die Patenterteilung: **03.05.2017**
(21) Anmeldenummer: 10763627.6
(22) Anmeldetag: 06.10.2010
(51) Int. Cl.: B60G 3/20, B60G 7/00, B60G 7/02, B60G 11/18, B60G 13/14, B60G 15/04, B60G 17/02

(54) **RADAUFHÄNGUNG FÜR KRAFTFAHRZEUGE**
VEHICLE SUSPENSION
SUSPENSION DE VÉHICULE

(30) Priorität: 30.10.2009 DE 102009051469
(43) Veröffentlichungstag der Anmeldung: 05.09.2012
(73) Patentinhaber: Audi AG, 85045 Ingolstadt (DE)
(72) Erfinder: MEITINGER, Karl-Heinz, 81667 München (DE); OHLETZ, Armin, 85092 Kösching (DE); SCHMIDT, Walter, 86643 Rennertshofen (DE)
(74) Vertreter: Asch, Konrad
(86) Internationale Anmeldenummer: PCT/EP2010/006084
(87) Internationale Veröffentlichungsnummer: WO 2011/050895

(56) Entgegenhaltungen:
- EP-A1- 0 378 028
- EP-A1- 1 354 731
- EP-A1- 1 935 677
- EP-A1- 1 935 679
- EP-A2- 0 301 782
- EP-A2- 1 380 768
- WO-A1-88/07454
- WO-A2-2004/018241
- DE-A1- 3 937 986
- DE-A1-102005 042 821
- DE-B3-102006 061 984
- DE-U1- 7 708 025
- GB-A- 756 026
- GB-A- 2 270 508
- US-A- 2 631 681
- US-A- 5 005 859
- US-A- 5 074 581
- US-A- 5 839 742
- US-A- 6 099 006
- US-A- 6 152 466
- US-A1- 2005 180 817

## Beschreibung

Die Erfindung betrifft eine Radaufhängung für Kraftfahrzeuge gemäß dem Oberbegriff des Patentanspruches 1.
Derartige Radaufhängungen sind in einer Vielzahl von ausgeführten Konstruktionen bekannt, wobei in der Regel Vorderradaufhängungen und Hinterradaufhängungen unterschiedlich ausgelegt und am Aufbau oder an entsprechend angepassten Hilfsrahmen angelenkt sind. Neben elastokinematischer Maßnahmen zur Verbesserung insbesondere der fahrdynamischen Anforderungen werden zunehmend mechatronische Bauteile eingesetzt, die Fahrzeug-Niveaueinstellungen ermöglichen, Nick-und Wankneigungen entgegenwirken, Spur- und Sturzwerte abhängig von fahrdynamischen Parametern korrigieren, etc. GB 756 026 A offenbart eine Radaufhängung gemäß dem Oberbegriff des Anspruchs 1. Aufgabe der Erfindung ist es, eine Radaufhängung vorzuschlagen, die in Modulbauweise für vordere und hintere Radachsen verwendbar ist, die niedrige Schwerpunkte gegebenenfalls vorhandener mechatronischer Bauteile ermöglicht und die unter Verwendung wesentlicher Gleichteile auf unterschiedliche, fahrdynamische Anforderungen auslegbar ist.
Diese Aufgabe wird gelöst mit den Merkmalen des Patentanspruchs 1. Vorteilhafte Weiterbildungen der Erfindung sind Gegenstand der Unteransprüche.
Gemäß Anspruch 1 ist eine Radaufhängung für Kraftfahrzeuge mit wenigstens einem oberen Lenker, insbesondere wenigstens einem oberen Querlenker, und wenigstens einem unteren Lenker, insbesondere wenigstens einem unteren Querlenker, vorgesehen, die einerseits am Aufbau des Kraftfahrzeuges angelenkt und andererseits eine bevorzugt im Wesentlichen vertikale Lenkachse bildend, mit einem Radträger verbunden sind, wobei wenigstens eine Tragfeder und wenigstens ein Stoßdämpfer vorgesehen sind. Erfindungsgemäß sind die wenigstens eine Tragfeder und/oder der wenigstens eine Stoßdämpfer rotatorisch ausgeführt. Mit einem derartigen Feder-Dämpfer-Konzept kann der Schwerpunkt weit abgesenkt werden und eine gewichtsoptimierte Anbindung an Federn und Dämpfern gewährleistet werden. Daraus resultiert, dass die relativ hohen Kräfte und Momente aus Federung und Stoßdämpfung von der Radaufhängung unmittelbar über den zum Beispiel unteren Querlenker in den steifen Bodenbereich der Karosserie des Kraftfahrzeuges eingeleitet und dort zuverlässig abgestützt werden können. Durch die tiefliegende Anordnung von Feder und Dämpfer wird dabei zudem Bauraum gewonnen, der zum Beispiel für eine größere Durchladebreite im Heckbereich eines Kraftfahrzeuges genutzt werden kann. Diese eben genannten Vorteile sind am größten, wenn sowohl die wenigstens eine Tragfeder als auch der wenigstens eine Stoßdämpfer rotatorisch ausgeführt sind.

Gemäß einer besonders bevorzugten konkreten Ausgestaltung hierzu ist vorgesehen, dass die Tragfeder durch zumindest eine Drehstabfeder und/oder der Stoßdämpfer durch einen Rotationsdämpfer gebildet ist. Mit einer derartigen Drehstabfeder beziehungsweise einem derartigen Rotationsdämpfer können die zuvor beschriebenen Vorteile auf besonders einfache und zuverlässige Weise realisiert werden. Dabei ist es des Weiteren vorteilhaft, dass zumindest der Rotationsdämpfer koaxial zu einer aufbauseitigen Schwenkachse des unteren Lenkers angeordnet ist.

In vorteilhafter Weiterbildung der Erfindung kann die aufbauseitige Schwenkachse des unteren Querlenkers im Wesentlichen in Fahrzeuglängsrichtung ausgerichtet sein. Alternativ, aber insbesondere zusätzlich dazu verläuft die zumindest eine Drehstabfeder koaxial zur Schwenkachse. Dies ermöglicht eine unmittelbare Anbindung der Drehstabfeder an den unteren Querlenker ohne erforderliche Übertragungshebel, etc.

Dabei kann in baulich einfacher Weise der Rotationsdämpfer zugleich eine Lagerstelle des unteren Lenkers bilden und aufbauseitig befestigt sein. Ferner kann die Drehstabfeder durch den Rotationsdämpfer hindurch trieblich mit dem unteren Lenker gekoppelt sein.

Zur Erzielung einer Niveauverstellung und/oder eines Wank-und Nickausgleiches sowie gegebenenfalls weiterer fahrdynamischer Eingriffe wird des Weiteren vorgeschlagen, dass an dem unteren Lenker zumindest eine weitere Drehstabfeder angreift, deren Federvorspannung mittels eines elektromotorisch verstellbaren Rotationsaktuators verstellbar ist und die der Tragfeder zur Verstellung der Gesamtfederrate überlagerbar ist.

Zur Verringerung der axialen Länge der weiteren Drehstabfeder kann diese durch zwei teleskopisch ineinander angeordnete und seriell zusammenwirkende Torsionsfedern gebildet sein, die miteinander und einerseits mit dem Rotationsaktuator und andererseits mit dem unteren Lenker trieblich verbunden sind. Dabei kann auch der Rotationsaktuator zugleich eine aufbauseitige Lagerstelle des unteren Lenkers bilden oder zusätzlich anbaubar sein.

Eine baulich und montagetechnisch besonders günstige Konstruktion kann erzielt werden, wenn in der Draufsicht gesehen der Rotationsdämpfer und die erste Drehstabfeder auf einer Seite des unteren Lenkers und der Rotationsaktuator und die weitere Drehstabfeder auf einer zweiten Seite des Lenkers angeordnet sind.

Bevorzugt können die erste und/oder die zweite Drehstabfeder aus Titan hergestellt sein. Aufgrund der höheren Festigkeit und der geringeren Steifigkeit zu Stahl können die Federn kürzer und leichter ausgeführt sein.

Der obere Lenker der Radaufhängung kann zudem über einen weiteren elektromotorischen Aktuator am Aufbau des Kraftfahrzeuges angelenkt und zur veränderbaren Einstellung des Radsturzes und/oder des Nachlaufes verstellbar sein. Damit ist eine weitere, vorteilhafte Möglichkeit zur Anpassung der Radaufhängung an fahrdynamische Anforderungen gegeben. Zum Beispiel kann der Radsturz beim Durchfahren von Kurven zur verbesserten Abstützung von Seitenkräften entsprechend verstellt werden.

Dabei kann zur Erzielung einer baulich günstigen Montageeinheit der am Aufbau des Kraftfahrzeuges befestigte Aktuator unmittelbar die beiden, eine Schwenkachse definierenden Lagerstellen des oberen Querlenkers aufweisen beziehungsweise ausbilden.

Ein spurführender Lenker der Radaufhängung kann bevorzugt mittels eines Lenkaktuators längenverstellbar sein, um somit voneinander entkoppelte links- oder rechtsseitige Radaufhängungen zu schaffen, die autark verbaubar sind und deren Vorderräder und gegebenenfalls auch die Hinterräder des Kraftfahrzeuges im steer-by-wire-System gemeinsam oder zur Spurkorrektur einzeln gelenkt werden.

In vorteilhafter Weise können dazu die beiden Querlenker und der Rotationsdämpfer, sowie gegebenenfalls der Rotationsaktuator, der Aktuator am oberen Lenker und der Lenkaktuator für den spurführenden Lenker an einem bevorzugt einseitigen und/oder einstückigen Modulrahmen befestigt sein. Die hier auch ganz allgemein und unabhängig beanspruchten Modulrahmen können bevorzugt Gleichteile sein, die sowohl am Vorbau des Kraftfahrzeuges als auch am Heck anbaubar und als komplette Vormontageeinheiten mit definierten, insbesondere mit sämtlichen Bauteilen der Radaufhängung bestückt sein können. Der Modulrahmen weist bevorzugt ein ringförmig geschlossenes äußeres Rahmenteil auf, in dem definierte Ausnehmungen ausbildende Quer- und/oder Längsstreben verlaufen. Durch die Ausnehmungen können Bauteile hindurchgeführt werden. An den Quer- und/oder Längsstreben können die Bauteile, zum Beispiel die Lenker und/oder Aktuatoren, angebunden werden. Der Modulrahmen erstreckt sich im montierten Zustand bevorzugt entlang einer durch die Fahrzeuglängsachse und durch die Fahrzeughochachse aufgespannten Vertikalebene.

Des Weiteren kann der Modulrahmen über passive oder aktive, vorzugsweise gummielastische Entkopplungselemente, insbesondere Gummi-Metall-Lager, mit dem Aufbau des Kraftfahrzeuges verbunden sein, wobei bevorzugt vorgesehen ist, dass die Entkopplungselemente in Längsrichtung nachgiebiger als in Querrichtung ausgelegt sind. Daraus resultiert eine hohe Seitensteifigkeit mit präziser Lenkbarkeit der Radführung, bei gleichzeitiger, verbesserter Längsnachgiebigkeit beim Überfahren von Fahrbahnunebenheiten. Durch die mechanische Entkopplung der Radaufhängungen untereinander werden dabei unbeabsichtigte Lenkbewegungen der Räder ausgeschlossen.

Insbesondere in Kombination dazu können die aufbauseitigen und radträgerseitigen Lagerstellen wenigstens eines Teils der Lenker, bevorzugt der oberen und unteren Lenker, die insbesondere durch Querlenker ausgebildet sind, und des spurführenden Lenkers, durch im Wesentlichen unelastische Gelenkstellen gebildet sein, um die Kraftübertragungspfade von den Aktuatoren zu den Rädern zu optimieren. Da die Elastizitäten zwischen den Aktuatoren und den Rädern reduziert sind und sich im Wesentlichen auf lineare Elastizitäten beschränken, kann die Radstellung genauer berechnet und die Regelung der Radstellungen optimiert werden.

Eine besonders vorteilhafte und energieeffiziente Auslegung der Radaufhängung kann erzielt werden, wenn der mit dem unteren Lenker gekoppelte Rotationsdämpfer und/oder der Rotationsaktuator generatorisch auf Rekuperationsbetrieb umschaltbar sind. Neben der damit verbundenen Energierückgewinnung kann zusätzlich der Rotationsaktuator als weiterer Rotationsdämpfer wirken und Schwingungsanregungen insbesondere im niederfrequenten Bereich mit bedämpfen.

Schließlich können gemäß einem weiteren separaten Erfindungsaspekt bei über Gelenkwellen angetriebenen Rädern des Kraftfahrzeuges die Scheibenbremsen der Betriebsbremse im Kraftfluss vor den Gelenkwellen und außerhalb der Radaufhängung angeordnet sein. Daraus resultiert u.a. eine weitere Schwerpunktabsenkung der Federungs- und Dämpfungseinrichtungen der Radaufhängung, weil durch den Entfall der relativ großvolumigen Scheibenbremsen im Felgenbereich im Durchmesser kleinere Räder einsetzbar sind.

Ein Ausführungsbeispiel der Erfindung ist im Folgenden mit weiteren Einzelheiten näher erläutert. Die schematische Zeichnung zeigt in:
- **Fig. 1**: in raumbildlicher Darstellung eine Radaufhängung für Kraftfahrzeuge mit einem oberen und einem unteren Querlenker, die an einem Modulrahmen angelenkt sind, sowie mit einem Rotationsdämpfer, einem Rotationsaktuator, einer Drehstabfeder als Tragfeder und einem Lenkaktuator;
- **Fig. 2**: die Radaufhängung nach **Fig. 1** ohne Modulrahmen; und
- **Fig.3**: ein Ersatzschaltbild der Federungs- und Dämpfungseinrichtung der Radaufhängung nach den **Fig. 1** **und** **2**.

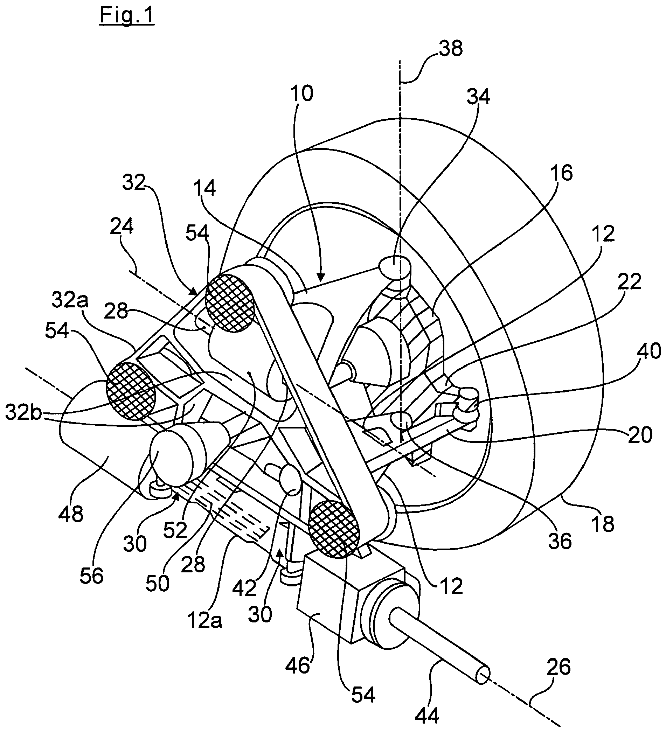

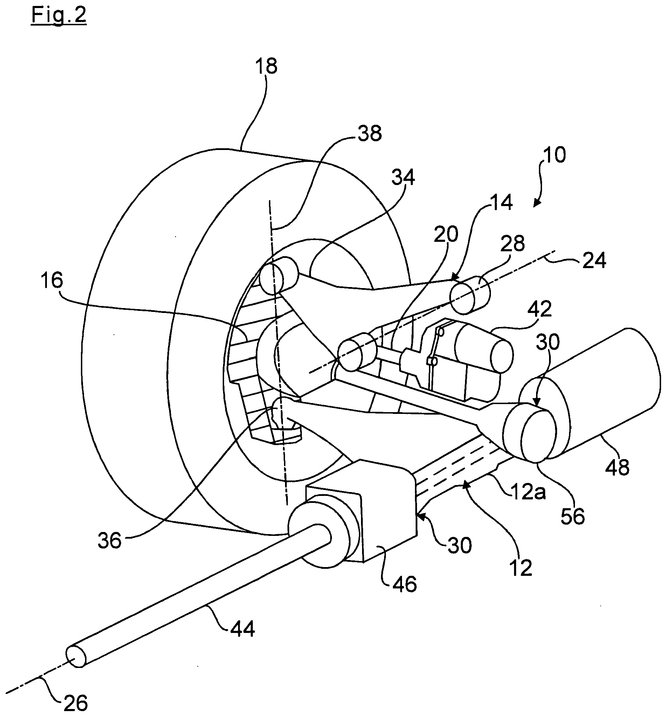

Die **Fig. 1** **und** **2** zeigen in zwei unterschiedlichen Ansichten eine Radaufhängung 10 für Kraftfahrzeuge, die an der Vorderachse und an der Hinterachse einsetzbar ist.

Die Radaufhängung 10 setzt sich im Wesentlichen zusammen aus einem unteren Querlenker 12, einem oberen Querlenker 14, einem Radträger 16 für ein drehbar gelagertes Rad 18 und einem dritten Lenker 20, der einerseits an einem Lenkarm 22 des Radträgers 16 angelenkt ist.

Die beiden Querlenker 12, 14 sind über jeweils eine etwa in Fahrzeuglängsrichtung ausgerichtete Schwenkachse 24, 26 über jeweils zwei Lagerstellen 28, 30 mittelbar oder unmittelbar an einem Modulrahmen 32 angelenkt. Radträgerseitig sind die Querlenker 12, 14 über Kugelgelenke 34, 36 mit dem Radträger 16 unter Bildung einer im Wesentlichen senkrechten Lenkachse 38 verbunden.

Der dritte Lenker 20 (auch als Spurstange zu bezeichnen) ist räumlich außerhalb dieser Lenkachse 38 über ein weiteres Kugelgelenk 40 an dem Lenkarm 22 angelenkt und andererseits gelenkig mit einem Lenkaktuator 42 (vgl. insbesondere **Fig. 2**) verbunden, der wiederum mit dem Modulrahmen 32 fest verschraubt ist.

Über den Lenkaktuator 42 kann der dritte Lenker 20 elektromotorisch zum Steuern einer Lenkbewegung des Rades 18 oder zur Spurkorrigierung längenverstellt werden.

Der untere Querlenker 12 ist mit einer koaxial zu seiner Schwenkachse 26 angeordneten Drehstabfeder 44 (nur teilweise ersichtlich) unmittelbar trieblich verbunden. Die Drehstabfeder 44 dient als Tragfeder und ist einerseits (nicht ersichtlich) mit dem Aufbau des Kraftfahrzeuges fest verbunden. Die Verbindungen können zum Beispiel als Kerb-Steckverzahnungen ausgeführt sein.

Die Drehstabfeder 44 erstreckt sich dabei durch einen ebenfalls koaxial zur Schwenkachse 26 und unmittelbar dem Querlenker 12 benachbart angeordneten, als Stoßdämpfer dienenden Rotationsdämpfer 46, dessen Gehäuse mit dem Modulrahmen 32 fest verschraubt ist und dessen Rotorteile (nicht ersichtlich) trieblich mit dem Querlenker 12 fest verbunden sind.

An der gegenüberliegenden Seite des Querlenkers 12 ist koaxial zu dessen Schwenkachse 26 ein Rotationsaktuator 48 vorgesehen, dessen Gehäuse wiederum mit dem Modulrahmen 32 fest verschraubt ist und dessen Rotorteile (nicht ersichtlich) über eine nur in gestrichelten Linien in der **Fig. 1** angedeutete, zweite Drehstabfeder 50 mit dem unteren Querlenker 12 trieblich verbunden ist.

Die Drehstabfeder 50 ist dabei innerhalb eines rohrförmigen Abschnittes 12a des Querlenkers 12 angeordnet und besteht zum Beispiel aus zwei teleskopisch ineinander verlaufenden Torsionsfedern aus zum Beispiel Titan, die innerhalb des rohrförmigen Abschnittes 12a fest miteinander verbunden sind, während deren freie Enden mit dem Rotationsaktuator 48 beziehungsweise dem Querlenker 12 trieblich verbunden sind.

Über den Rotationsaktuator 48 kann die Vorspannung der zweiten Drehstabfeder 50 zur Beeinflussung der Gesamtfederrate der Federrate der ersten, als Tragfeder eingesetzten Drehstabfeder 44 überlagert werden, zum Beispiel zur Niveauverstellung der Karosserie des Kraftfahrzeuges, zur Wank- und Nickausgleichssteuerung, etc.

An dem Modulrahmen 32 ist im Bereich der Schwenkachse 24 des oberen Querlenkers 14 ein weiterer elektromotorischer Aktuator 52 befestigt, mittels dem die Lenkachse 38 des Rades 18 zur Sturz- und/oder Nachlaufverstellung veränderbar ist. Der Aktuator 52 bildet dabei zugleich die Lagerstellen 28 des oberen Querlenkers 14, das heißt der obere Querlenker 10 ist dort mit seinen Lagerstellen 28 gelagert. Durch entsprechende Ansteuerung des Aktuators 52 können in nicht dargestellter Weise die Lagerstellen 28 relativ zum Modulrahmen 32 in definierte Raumrichtungen, bevorzugt wenigstens in Querrichtung verstellt werden.

Der Modulrahmen 32 ist über drei, in angeformte Lagerbuchsen 54 eingesetzte, Gummi-Metall-Lager (lediglich schematisch mit Kreuzschraffur eingezeichnet) am Aufbau des Kraftfahrzeuges angeschraubt. Die Gummi-Metall-Lager sind dabei konstruktiv in Fahrzeugquerrichtung härter ausgelegt als in Fahrzeuglängsrichtung, um eine komfortable Längsfederung der Radaufhängung 10 sicherzustellen.

Des Weiteren sind die Lagerstellen 28, 34 des oberen Querlenkers 14, die Lagerstellen 30, 36 des unteren Querlenkers 12 und die Gelenkstelle 36 am Lenker 20 mit der nicht näher dargestellten Gelenkstelle am Lenkaktuator 42 im Wesentlichen unelastisch (nicht gezielt elastisch) ausgebildet, um eine präzise Radführung und präzise steuerbare Radstellungen über die Aktuatoren 42, 46, 48, 52 zu ermöglichen. Die Lagerstellen 30 des Querlenkers 12 können anstelle am Modulrahmen 32 auch unmittelbar in den Aktuatoren 46, 48 ausgeführt sein.

Das Rad 18 ist mittels einer mit dem Antriebsaggregat des Kraftfahrzeuges trieblich verbundenen Gelenkwelle 56 verbunden, wobei die nicht dargestellte Scheibenbremse des Rades 18 im Kraftfluss vor der Gelenkwelle 56, also unmittelbar am jeweiligen Abtrieb des Antriebsaggregates positioniert ist.

Die in der **Fig. 1** gezeigte Radaufhängung 10 mit dem Modulrahmen 32 bildet eine Vormontageeinheit, die bei einem allradgetriebenen Kraftfahrzeug mit Vierradlenkung an der Vorderachse (vordere Radaufhängungen 10) und an der Hinterachse (hintere Radaufhängungen 10) einsetzbar ist. Die links- und rechtseitigen Ausführungen sind natürlich spiegelbildlich aufzubauen, können aber bei symmetrischer Ausführung der Bauteile im Wesentlichen Gleichteile sein.

Der Rotationsdämpfer 46 ist bevorzugt als Generator ausgeführt, wodurch die aufzubringende Dämpfungsarbeit im Rekuperationsbetrieb als elektrische Energie dem Bordnetz des Kraftfahrzeuges wieder zuführbar ist. Der Rotationsdämpfer 46 kann aber auch kombiniert dazu oder ausschließlich als hydraulischer Dämpfer mit gegebenenfalls einer elektrorheologischen Dämpfungsflüssigkeit zur veränderbaren Einstellung der Dämpfungswirkung ausgeführt sein.

Der Rotationsaktuator 48 ist ebenfalls neben der elektromotorisch gesteuerten Veränderung der Vorspannung der zweiten Drehstabfeder 50 als Generator schaltbar, um gegebenenfalls zusätzliche Dämpfungsarbeit im Rekuperationsbetrieb zu leisten beziehungsweise Energie zurück zu speichern.

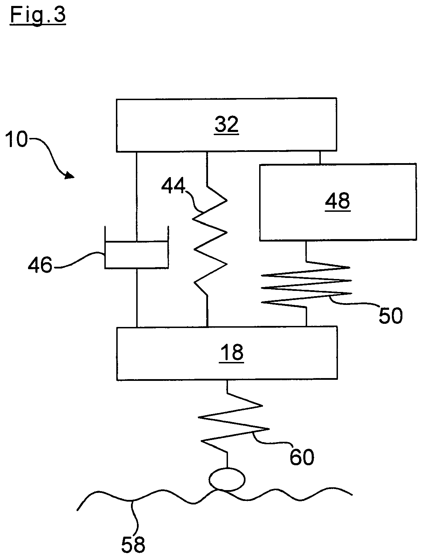

Die **Fig. 3** zeigt das Prinzipschaltbild der Federungs- und Dämpfungseinrichtung der in den **Fig. 1** **und** **2** gezeigten Radaufhängung 10. Funktionell gleiche Teile sind mit gleichen Bezugszeichen versehen.

Wie ersichtlich ist, sind zwischen dem Aufbau (Modulrahmen 32) und dem Rad 18 die Drehstabfeder 44 als Tragfeder und die zweite Drehstabfeder 50 parallel angeordnet, wobei die Vorspannung der zweiten Drehstabfeder 50 mittels des Rotationsaktuators 48 zur Niveauverstellung und zum Wank- und Nickausgleich des Kraftfahrzeuges entsprechend der ersten Drehstabfeder 44 überlagerbar ist. Der Einfachheit halber sind die Federn 44, 50 als Schraubendruckfedern dargestellt.

Der ebenfalls parallel geschaltete Rotationsdämpfer 46 (wiederum vereinfacht dargestellt) wirkt in bekannter Weise zur Dämpfung der Aufbauschwingungen, die über Unebenheiten der Fahrbahn 58 und über den Elastizitätsfaktor 60 des Reifens des Rades 18 angeregt werden. Wie vorbeschrieben kann gegebenenfalls auch der Rotationsaktuator 48 eine definierte Dämpfungswirkung ausüben.

## Patentansprüche

1. Radaufhängung für Kraftfahrzeuge, mit wenigstens einem oberen Lenker (14), insbesondere einem oberen Querlenker, und wenigstens einem unteren Lenker (12), insbesondere einem unteren Querlenker, die einerseits am Aufbau (32) des Kraftfahrzeuges angelenkt und andererseits, eine bevorzugt im Wesentlichen vertikale Lenkachse (38) bildend, mit einem Radträger (16) verbunden sind, wobei wenigstens eine Tragfeder (44) und wenigstens ein Stoßdämpfer (46) vorgesehen sind, wobei die wenigstens eine Tragfeder (44) durch zumindest eine Drehstabfeder und der wenigstens eine Stoßdämpfer (46) durch einen Rotationsdämpfer (46) rotatorisch ausgeführt sind., **dadurch gekennzeichnet, dass** an dem unteren Lenker (12) zumindest eine weitere Drehstabfeder (50) angreift, deren Federvorspannung mittels eines elektromotorisch verstellbaren Rotationsaktuators (48) verstellbar ist.

2. Radaufhängung nach Anspruch 1, **dadurch gekennzeichnet, dass** die wenigstens eine Tragfeder (44) und der wenigstens eine Stoßdämpfer (46) auf den unteren Lenker (12) wirken und aufbauseitig abgestützt sind.

3. Radaufhängung nach Anspruch 1 oder 2, **dadurch gekennzeichnet, dass** zumindest der Rotationsdämpfer (46) koaxial zu einer aufbauseitigen Schwenkachse (26) des unteren Lenkers (12) angeordnet ist.

4. Radaufhängung nach Anspruch 3, **dadurch gekennzeichnet, dass** die aufbauseitige Schwenkachse (26) des unteren Lenkers (12) im Wesentlichen in Fahrzeuglängsrichtung ausgerichtet ist und/oder dass auch die zumindest eine Drehstabfeder (44) koaxial zur Schwenkachse (26) verläuft.

5. Radaufhängung nach Anspruch 1, 2, 3 oder 4, **dadurch gekennzeichnet, dass** der Rotationsdämpfer (46) zugleich eine Lagerstelle (30) des unteren Lenkers (12) bildet und aufbauseitig befestigt ist.

6. Radaufhängung nach Anspruch 4 und 5, **dadurch gekennzeichnet, dass** die Drehstabfeder (44) durch den Rotationsdämpfer (46) hindurch trieblich mit dem unteren Lenker (12) gekoppelt ist.

7. Radaufhängung nach einem der vorhergehenden Ansprüche, **dadurch gekennzeichnet, dass** die weitere Drehstabfeder (50) durch zwei teleskopisch ineinander angeordnete und seriell zusammenwirkende Torsionsfedern gebildet ist, die miteinander und einerseits mit dem Rotationsaktuator (48) und andererseits mit dem unteren Lenker (12) trieblich verbunden sind.

8. Radaufhängung nach einem der vorhergehenden Ansprüche, **dadurch gekennzeichnet, dass** der Rotationsaktuator (48) zugleich eine aufbauseitige Lagerstelle (30) des unteren Lenkers (12) bildet.

9. Radaufhängung nach einem der vorhergehenden Ansprüche, **dadurch gekennzeichnet, dass** in der Draufsicht gesehen der Rotationsdämpfer (46) und die erste Drehstabfeder (50) auf einer, bezogen auf eine Längsmittenebene, ersten Seite des Lenkers (12) und der Rotationsaktuator (48) und die weitere Drehstabfeder (50) beabstandet dazu auf einer, bezogen auf die Längsmittenebene gegenüberliegenden zweiten Seite des unteren Lenkers (12) angeordnet sind.

10. Radaufhängung nach einem der vorhergehenden Ansprüche, **dadurch gekennzeichnet, dass** die wenigstens eine Tragfeder, insbesondere die erste und/oder zweite Drehstabfeder (44, 50), aus Titan hergestellt ist.

11. Radaufhängung nach einem der vorhergehenden Ansprüche, **dadurch gekennzeichnet, dass** der bevorzugt als oberer Querlenker (14) ausgebildete obere Lenker über einen elektromotorischen Aktuator (52) am Aufbau des Kraftfahrzeuges angelenkt und zur veränderbaren Einstellung des Radsturzes und/oder des Nachlaufes verstellbar ist.

12. Radaufhängung nach Anspruch 11, **dadurch gekennzeichnet, dass** der am Aufbau des Kraftfahrzeuges befestigte Aktuator (52) unmittelbar wenigstens zwei, eine Schwenkachse (24) definierende Lagerstellen (28) des oberen Querlenkers (14) aufweist beziehungsweise ausbildet.

13. Radaufhängung nach einem der vorhergehenden Ansprüche, **dadurch gekennzeichnet, dass** ein weiterer, spurführender Lenker (20) an einem Lenkarm (22) des Radträgers (16) angreift, der unverstellbar oder über eine Lenkeinrichtung verstellbar am Aufbau angelenkt ist.

14. Radaufhängung nach Anspruch 13, **dadurch gekennzeichnet, dass** der spurführende Lenker (20) mittels eines Lenkaktuators (42) längenverstellbar ist.

15. Radaufhängung nach einem der vorhergehenden Ansprüche, **dadurch gekennzeichnet, dass** die aufbauseitigen und radträgerseitigen Lagerstellen (28, 30, 34, 36, 40) des wenigstens einen Lenkers (12, 14, 20), insbesondere von dem oberen und unteren Lenker und/oder des wenigstens eines Spurlenkers, durch im Wesentlichen unelastische Gelenkstellen gebildet sind.

16. Radaufhängung nach einem der vorhergehenden Ansprüche, **dadurch gekennzeichnet, dass** die Lenker (12, 14), insbesondere wenigstens ein oberer und/oder unterer Querlenker und/oder ein Spurlenker, und/oder der Stoßdämpfer (44) und/oder wenigstens ein Aktuator, insbesondere ein Rotationsaktuator (48) für eine Drehstabfeder und/oder ein Aktuator (42) am oberen Lenker (14) und/oder ein Lenkaktuator (42) für einen Spurlenker (20), an einem bevorzugt einseitigen und/oder einstückigen Modulrahmen (32) befestigt sind.

17. Radaufhängung nach Anspruch 16, **dadurch gekennzeichnet, dass** der Modulrahmen (32) über passive oder aktive, vorzugsweise gummielastische Entkopplungselemente, insbesondere Gummi-Metall-Lager, mit dem Aufbau des Kraftfahrzeuges verbunden ist.

18. Radaufhängung nach Anspruch 17, **dadurch gekennzeichnet, dass** die Entkopplungselemente in Längsrichtung nachgiebiger als in Querrichtung ausgelegt sind.

19. Radaufhängung nach einem der vorhergehenden Ansprüche, **dadurch gekennzeichnet, dass** der mit dem unteren Lenker (12) gekoppelte Rotationsdämpfer (46) und/oder der Rotationsaktuator (48) generatorisch auf Rekuperationsbetrieb umschaltbar sind.

20. Radaufhängung nach einem der vorhergehenden Ansprüche, **dadurch gekennzeichnet, dass** bei über Gelenkwellen (56) angetriebenen Rädern (18) des Kraftfahrzeuges die Scheibenbremsen der Betriebsbremse im Kraftfluss vor den Gelenkwellen (56) und außerhalb der Radaufhängung (10) angeordnet sind.

## Claims

1. Wheel suspension for motor vehicles having at least one upper control arm (14), in particular an upper transverse control arm and at least one lower control arm (12), in particular a lower transverse control arm which are pivoted on the one hand on the body (32) of the motor vehicle and on the other hand, forming a preferably substantially vertical steering axle (38), are connected to a wheel carrier (16) wherein at least one suspension spring (44) and at least one shock absorber (46) are provided wherein the at least one suspension spring (44) is formed in a rotary manner by at least one torsion bar and the at least one shock absorber (46) by a rotary damper (46), **characterised in that** at least one further torsion bar (50) engages on the lower control arm (12) whose spring pretensioning is displaceable by means of an electric motor-driven displaceable rotary actuator (48).

2. Wheel suspension according to claim 1, **characterised in that** the at least one suspension spring (44) and the at least one shock absorber (46) act on the lower control arm (12) and are supported on the body.

3. Wheel suspension according to claim 1 or 2, **characterised in that** at least the rotary damper (46) is arranged coaxially to a pivot axis (26) of the lower control arm (12) located on the body.

4. Wheel suspension according to claim 3, **characterised in that** the pivot axis (26) of the lower control arm (12) located on the body is aligned substantially in the longitudinal direction of the vehicle and/or **in that** the at least one torsion bar (44) also runs coaxially to the pivot axis (26).

5. Wheel suspension according to claim 1, 2, 3 or 4 **characterised in that** the rotary damper (46) also forms a bearing point (30) of the lower control arm (12) and is attached on the body.

6. Wheel suspension according to claim 4 and 5, **characterised in that** the torsion bar (44) is drivingly coupled to the lower control arm (12) through the rotary damper (46).

7. Wheel suspension according to any one of the preceding claims, **characterised in that** the further torsion bar (50) is formed by two torsion bars that are arranged telescopically in one another and cooperate in series which are drivingly connected to each other and, on the one hand, to the rotary actuator (48) and on the other hand to the lower control arm (12).

8. Wheel suspension according to any one of the preceding claims, **characterised in that** the rotary actuator (48) also forms a bearing point (30) of the lower control arm (12) on the body.

9. Wheel suspension according to any one of the preceding claims, **characterised in that** viewed in the plan view, the rotary damper (46) and the first torsion bar (50) are arranged on a first side, in relation to a longitudinal central plane, of the control arm (12), and the rotary actuator (48) and the further torsion bar (50) are arranged spaced apart therefrom on a second side, opposed in relation to the longitudinal central plane, of the lower control arm (12).

10. Wheel suspension according to any one of the preceding claims, **characterised in that** the at least one suspension spring, in particular the first and/or second torsion bar (44, 50) is made from titanium.

11. Wheel suspension according to any one of the preceding claims, **characterised in that** the upper control arm preferably formed as an upper transverse control arm (14) is pivoted via an electric motor-driven actuator (52) on the body of the motor vehicle and is displaceable for the modifiable setting of the wheel camber and/or caster.

12. Wheel suspension according to claim 11, **characterised in that** the actuator (52) attached to the body of the motor vehicle directly comprises or forms at least two bearing points (28) of the upper transverse control arm (14) defining a pivot axis (24).

13. Wheel suspension according to any one of the preceding claims, **characterised in that** a further, track-guiding control arm (20) engages on a control arm (22) of the wheel carrier (16) which is pivoted on the structure non-displaceably or displaceably via a steering device.

14. Wheel suspension according to claim 13, **characterised in that** the track-guiding control arm (20) is displaceable in terms of length by means of a steering actuator (42).

15. Wheel suspension according to any one of the preceding claims, **characterised in that** the bearing points (28, 30, 34, 36, 40) of the at least one control arm (12, 14, 20), located on the body and wheel carrier, in particular of the upper and lower control arm and/or of the at least one track control arm are formed by substantially inelastic joints.

16. Wheel suspension according to any one of the preceding claims, **characterised in that** the control arms (12, 14), in particular at least one upper and/or lower transverse control arm and/or a track control arm and/or the shock absorber (44) and/or at least one actuator, in particular a rotary actuator (48) for a torsion bar and/or an actuator (42) on the upper control arm (14) and/or a control arm actuator (42) for a track control arm (20) are attached on a preferably one-sided and/or one-piece module frame (32).

17. Wheel suspension according to claim 16, **characterised in that** the module frame (32) is connected via passive or active, preferably rubber-elastic decoupling elements, in particular rubber metal bearings to the body of the motor vehicle.

18. Wheel suspension according to claim 17, **characterised in that** the decoupling elements are designed more flexibly in the longitudinal direction than in the transverse direction.

19. Wheel suspension according to any one of the preceding claims, **characterised in that** the rotary damper (46) coupled to the lower control arm (12) and/or the rotary actuator (48) are generatively switchable to recovery operation.

20. Wheel suspension according to any one of the preceding claims, **characterised in that** in the case of wheels (18) of the motor vehicle driven via drive shafts (56), the disc brakes of the service brake are arranged in the force flow before the drive shafts (56) and outside the wheel suspension (10).

## Revendications

1. Suspension de roue pour véhicules automobiles, avec au moins un bras supérieur (14), notamment un bras transversal supérieur, et au moins un bras inférieur (12), notamment un bras transversal inférieur, qui sont articulés d'une part sur la carrosserie (32) du véhicule automobile et qui sont reliés d'autre part à un support de roue (16), formant ainsi un axe orientable (38) de préférence globalement vertical, au moins un ressort de suspension (44) et au moins un amortisseur (46) étant prévus, l'au moins un ressort de suspension (44) étant réalisé sous la forme d'au moins une barre de torsion et l'au moins un amortisseur (46) étant réalisé rotatif sous la forme d'un amortisseur rotatif (46), **caractérisée en ce qu'**au moins une autre barre de torsion (50) agit sur le bras inférieur (12), autre barre de torsion dont la précontrainte de ressort est réglable au moyen d'un actionneur rotatif (48) réglable par moteur électrique.

2. Suspension de roue selon la revendication 1, **caractérisée en ce que** l'au moins un ressort de suspension (44) et l'au moins un amortisseur (46) agissent sur le bras inférieur (12) et sont soutenus du côté de la carrosserie.

3. Suspension de roue selon la revendication 1 ou 2, **caractérisée en ce qu'**au moins l'amortisseur rotatif (46) est agencé coaxial à un axe de pivotement (26), côté carrosserie, du bras inférieur (12).

4. Suspension de roue selon la revendication 3, **caractérisée en ce que** l'axe de pivotement (26), côté carrosserie, du bras inférieur (12) est orienté globalement dans le sens de la longueur du véhicule et/ou **en ce que** l'au moins une barre de torsion (44) s'étend coaxiale à l'axe de pivotement (26).

5. Suspension de roue selon la revendication 1, 2, 3 ou 4, **caractérisée en ce que** l'amortisseur rotatif (46) constitue en même temps un point d'appui (30) du bras inférieur (12) et est fixé du côté de la carrosserie.

6. Suspension de roue selon les revendications 4 et 5, **caractérisé en ce que** la barre de torsion (44) est couplée au bras inférieur (12) de manière à transmettre un mouvement à travers l'amortisseur rotatif (46).

7. Suspension de roue selon l'une des revendications précédentes, **caractérisée en ce que** l'autre barre de torsion (50) est formée par deux ressorts de torsion qui sont agencés l'un dans l'autre de manière télescopique et coopèrent de manière sérielle et qui sont reliés, de manière à transmettre un mouvement, entre eux et d'une part à l'actionneur rotatif (48) et d'autre part au bras inférieur (12).

8. Suspension de roue selon l'une des revendications précédentes, **caractérisée en ce que** l'actionneur rotatif (48) constitue en même temps un point d'appui (30), côté carrosserie, du bras inférieur (12).

9. Suspension de roue selon l'une des revendications précédentes, **caractérisée en ce que**, dans une vue de dessus, l'amortisseur rotatif (46) et la première barre de torsion (50) sont agencés sur un premier côté, par rapport à un plan médian longitudinal, du bras (12) et l'actionneur rotatif (48) et l'autre barre de torsion (50) sont agencés, à distance des précédents, sur un deuxième côté, opposé par rapport au plan médian longitudinal, du bras inférieur (12).

10. Suspension de roue selon l'une des revendications précédentes, **caractérisée en ce que** l'au moins un ressort de suspension, notamment la première et/ou la deuxième barre de torsion (44, 50), est fabriqué en titane.

11. Suspension de roue selon l'une des revendications précédentes, **caractérisée en ce que** le bras supérieur, conçu de préférence comme un bras transversal supérieur (14), est articulé sur la carrosserie du véhicule automobile par l'intermédiaire d'un actionneur électromoteur (52) et est réglable en vue du réglage variable du carrossage et/ou de la chasse de roue.

12. Suspension de roue selon la revendication 11, **caractérisée en ce que** l'actionneur (52) fixé à la carrosserie du véhicule automobile comporte ou forme directement au moins deux points d'appui (28), définissant un axe de pivotement (24), du bras transversal supérieur (14).

13. Suspension de roue selon l'une des revendications précédentes, **caractérisée en ce qu'**un autre bras (20) de connexion agit sur un bras articulé (22) du support de roue (16) qui est articulé, non réglable ou réglable par l'intermédiaire d'un dispositif articulé, sur la carrosserie.

14. Suspension de roue selon la revendication 13, **caractérisée en ce que** le bras de connexion (20) est réglable en longueur au moyen d'un actionneur articulé (42).

15. Suspension de roue selon l'une des revendications précédentes, **caractérisée en ce que** les points d'appui (28, 30, 34, 36, 40), côté carrosserie et côté support de roue, de l'au moins un bras (12, 14, 20), notamment du bras supérieur et du bras inférieur et/ou de l'au moins un bras de connexion, sont formés par des points d'articulation globalement non élastiques.

16. Suspension de roue selon l'une des revendications précédentes, **caractérisée en ce que** les bras (12, 14), notamment au moins un bras transversal supérieur et/ou inférieur et/ou un bras de connexion, et/ou l'amortisseur (44) et/ou au moins un actionneur, notamment un actionneur rotatif (48) pour une barre de torsion et/ou un actionneur (42) au niveau du bras supérieur (14) et/ou un actionneur d'articulation (42) pour un bras de connexion (20), sont fixés à un châssis modulaire (32) de préférence d'un seul côté et/ou d'une seule pièce.

17. Suspension de roue selon la revendication 16, **caractérisée en ce que** le châssis modulaire (32) est relié à la carrosserie du véhicule automobile par l'intermédiaire d'éléments de découplage passifs ou actifs, de préférence élastiques, notamment des supports caoutchouc-métal.

18. Suspension de roue selon la revendication 17, **caractérisée en ce que** les éléments de découplage sont conçus de manière à pouvoir plus fléchir dans la direction longitudinale que dans la direction transversale.

19. Suspension de roue selon l'une des revendications précédentes, **caractérisée en ce que** l'amortisseur rotatif (46) couplé au bras inférieur (12) et/ou l'actionneur rotatif (48) peuvent être commutés sur un mode de fonctionnement de récupération en générateur.

20. Suspension de roue selon l'une des revendications précédentes, **caractérisée en ce que**, dans le cas de roues (18) du véhicule automobile qui sont entraînées par l'intermédiaire d'arbres articulés (56), les freins à disques du frein de service sont agencés, dans le flux de force, avant les arbres articulés (56) et en dehors de la suspension de roue (10).
